# EUROPÄISCHE PATENTSCHRIFT

(11) **EP 1 287 313 B1**
(45) Veröffentlichungstag und Bekanntmachung des Hinweises auf die Patenterteilung: **01.07.2009**
(21) Anmeldenummer: 01947302.4
(22) Anmeldetag: 22.05.2001
(51) Int. Cl.: G01C 3/08

(54) **OPTISCHER ENTFERNUNGSMESSER**
OPTICAL RANGEFINDER
TELEMETRE OPTIQUE

(30) Priorität: 03.06.2000 EP 01120583
(43) Veröffentlichungstag der Anmeldung: 05.03.2003
(73) Patentinhaber: Leica Geosystems AG, 9435 Heerbrugg (CH)
(72) Erfinder: GÄCHTER, Bernhard, CH-9436 Balgach (CH); VOKINGER, Urs, CH-9434 Au (CH)
(74) Vertreter: Kaminski, Susanne
(86) Internationale Anmeldenummer: PCT/EP2001/005859
(87) Internationale Veröffentlichungsnummer: WO 2001/094883

(56) Entgegenhaltungen:
- EP-A- 0 660 157
- US-A- 4 185 891
- US-A- 5 883 706

## Beschreibung

### Technisches Gebiet

Die Erfindung betrifft einen optischen Entfernungsmesser, wie sie z. B. bei Vermessungen von Grundstücken und Bauten eingesetzt werden.

### Stand der Technik

Gattungsgemässe optische Entfernungsmesser sind seit längerem bekannt. Die Leuchtdichte der gewöhnlich eingesetzten Sender mit einer Laserdiode als Lichtquelle ist jedoch in der Regel geringer als es unter dem Gesichtspunkt des Augenschutzes zulässig wäre. Ausserdem weist der von einer einzelnen Laserdiode ausgehende Lichtstrahl gewöhnlich einen ungünstigen, sehr langgestreckten Querschnitt auf, was zu einer unzureichenden Konzentration auf das Ziel und in der Folge zu ungenügendem Lichtstrom und Messfehlern führen kann. Aus diesen Gründen sind Reichweite sowie Messgenauigkeit und -sicherheit gattungsgemässer Entfernungsmesser geringer als es wünschenswert und grundsätzlich auch möglich wäre.

### Darstellung der Erfindung

Der Erfindung liegt die Aufgabe zu Grunde, einen gattungsgemässen optischen Entfernungsmesser anzugeben, dessen Sender eine hohe Leuchtdichte aufweist und eine gute Zielausleuchtung und hohen Lichtstrom am Ziel sicherstellt.

Die durch die Erfindung erzielten Vorteile liegen vor allem in einer entscheidenden Verbesserung der Reichweite, d. h. der maximalen Messdistanz oder, bei gegebener Reichweite, einer Erhöhung der Messgenauigkeit. Diese Vorteile werden mit verhältnismässig kleiner Senderoptik erzielt, was es erlaubt, die Abmessungen des gesamten Geräts gering zu halten.

### Kurze Beschreibung der Zeichnungen

Im folgenden wird die Erfindung anhand von Figuren, welche lediglich Ausführungsbeispiele darstellen, näher erläutert. Es zeigen
- Fig. 1a: ein Schema des Senders eines erfindungsgemässen Entfernungsmessers gemäss einer ersten Ausführungsform,
- Fig. 1b: den Strahlquerschnitt des Senders gemäss der ersten Ausführungsform am Ziel,
- Fig. 2a: ein Schema des Senders eines erfindungsgemässen Entfernungsmessers gemäss einer zweiten Ausführungsform,
- Fig. 2b: den Strahlquerschnitt des Senders gemäss der zweiten Ausführungsform am Ziel,
- Fig. 3: ein Schema des Senders eines erfindungsgemässen Entfernungsmessers gemäss einer dritten Ausführungsform,
- Fig. 4: ein Schema des Senders eines erfindungsgemässen Entfernungsmessers gemäss einer vierten Ausführungsform,
- Fig. 5: schematisch den Aufbau des Senders eines erfindungsgemässen Entfernungsmessers gemäss einer fünften Ausführungsform und
- Fig. 6: die Apertur des Kollimators des erfindungsgemässen Entfernungsmessers gemäss der fünften Ausführungsform und den Strahlquerschnitt an demselben.

### Wege zur Ausführung der Erfindung

Ein erfindungsgemässer optischer Entfernungsmesser weist einen Sender auf sowie einen Empfänger, welcher z. B. in bekannter Weise mit einer Optik und avalanche-Photodioden aufgebaut sein kann sowie eine elektronische Steuer- und Auswerteeinheit ebenfalls bekannter Ausbildung, welche die Aussendung von Lichtimpulsen durch den Sender steuert und das Ausgangssignal des Empfängers, der die reflektierten Lichtimpulse empfängt, auswertet. Die Entfernungsmessung kann durch Laufzeitmessung oder nach dem Phasenvergleichsverfahren erfolgen. 'Licht' ist dabei stets so zu verstehen, dass es sich nicht auf den sichtbaren Bereich des Spektrums beschränkt, sondern mindestens auch den Infrarotbereich umfasst.

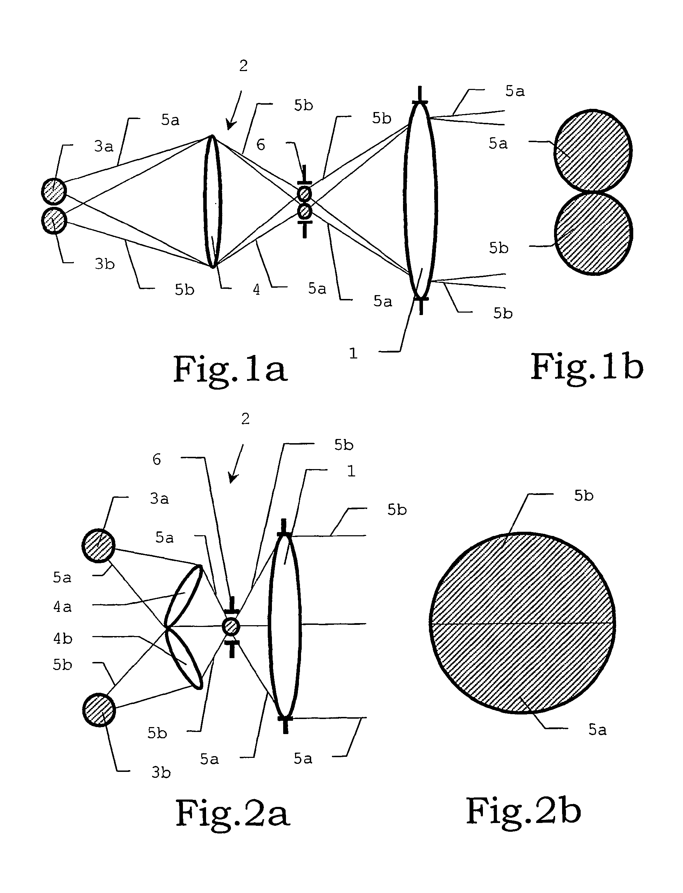

Der Sender eines erfindungsgemässen Entfernungsmessers kann in seinem grundsätzlichen Aufbau grosse Unterschiede aufweisen. In jedem Fall jedoch weist er (Fig. 1-5) einen Kollimator 1 auf und eine demselben vorgeordnete, jeweils aus mindestens zwei Teillichtquellen bestehende Lichtquelle sowie eine im Strahlengang zwischen der Lichtquelle und dem Kollimator angeordnete Strahlsammeloptik 2. Jede Teillichtquelle enthält eine Laserdiode, die gewöhnlich ein Kantenemitter ist oder auch mehrere in der Richtung der Emissionskanten aufeinanderfolgend angeordnete derartige Laserdioden. Die allen Laserdioden gemeinsame Wellenlänge liegt im Infrarotbereich, vorzugsweise zwischen 850 nm und 980 nm oder bei 1'550 nm. Der Querschnitt des von einer Laserdiode ausgehenden Lichstrahls kann jeweils mittels einer sehr nahe an der Emissionskante angeordneten, auf Lichtbeugung oder -brechung beruhenden Strahlformungsoptik durch Umlagerung parallel zur Emissionskante verringert und dafür quer dazu vergrössert und der Lichtstrahl dadurch stärker konzentriert werden.

Bei Wellenlängen zwischen 850 nm und 980 nm kann der Strahl sehr eng gebündelt werden, was eine Distanzrasterung mit hoher lateraler Auflösung gestattet. Sehr vorteilhaft sind auch Wellenlängen um 1'550 nm, weil dann die im Hinblick auf die Augensicherheit gegebene Obergrenze der zulässigen Einzelpulsenergie mit ca. 8 mJ um einen Faktor von ca. 16'000 höher liegt als bei Wellenlängen zwischen 630 nm und 980 nm. Die wenigstens teilweise Ausnützung dieses Faktors, die erfindungsgemäss möglich ist, gestattet eine sehr wesentliche Steigerung der Reichweite oder - bei gegebener Reichweite - der Messgenauigkeit.

Gemäss dem ersten Schema (Fig. 1a) besteht die Lichtquelle aus zwei unmittelbar nebeneinander angeordneten Teillichtquellen 3a,b. Die Strahlsammeloptik 2 ist als beiden Teillichtquellen gemeinsame Sammeloptik 4 ausgebildet, welche von denselben ausgehende Teilstrahlen 5a,b in der Objektebene 6 des Kollimators 1 sammelt. Sie fallen derart in die Apertur des Kollimators 1, dass jeder einzelne der Teilstrahlen 5a,b die Apertur weitgehend füllt und mithin ihre Querschnitte dort weitgehend überlappen. Anschliessend an den Kollimator 1 laufen die Teilstrahlen 5a,b wieder auseinander, doch nur so weit, dass am Ziel ihre Querschnitte unmittelbar nebeneinander liegen (Fig. 1b). Der vom Sender ausgehende Lichtstrahl weist am Ziel einen etwa doppelt so grossen Lichtstrom auf wie ein von einer einzelnen Laserdiode ausgehender Lichtstrahl.

Gemäss dem zweiten Schema (Fig. 2a) sind die Teillichtquellen 3a,b weiter voneinander entfernt. Jeder ist eine eigene Sammeloptik 4a;b zugeordnet, welche wiederum den von ihr ausgehenden Teilstrahl 5a bzw. 5b in der Objektebene 6 des Kollimators 1 sammelt. Die Teilstrahlen 5a,b treffen nebeneinander auf die Apertur des Kollimators 1, und zwar derart, dass sie sie im wesentlichen vollständig füllen und anschliessend an den Kollimator 1 parallel einen Lichtstrahl von rundem Querschnitt bilden (Fig. 2b), der also am Ziel nicht nur einen etwa doppelt so hohen Lichtstrom aufweist wie ein von einer einzelnen Laserdiode ausgehender Lichtstrahl, sondern auch einen günstigeren Querschnitt.

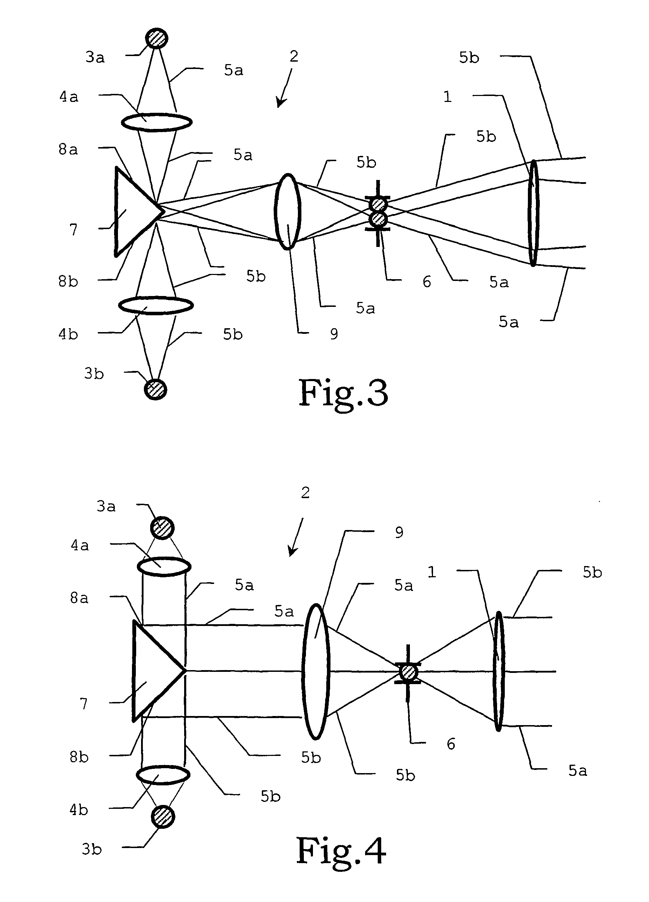

Gemäss dem dritten Schema (Fig. 3) sind die Teillichtquellen 3a,b einander gegenüberliegend angeordnet und die Strahlsammeloptik 2 weist denselben nachgeordnete Sammeloptiken 4a;b sowie ein zwischen denselben angeordnetes Prisma 7 als Umlenkelement auf. Das Prisma 7 weist zwei Reflexionsflächen 8a,b auf, welche die von den Teillichtquellen 3a,b ausgehenden Teillichtstrahlen 5a,b in eine weitere, gemeinsame Sammeloptik 9 ablenken, welche sie in ähnlicher Weise wie bei der Lichtquelle gemäss dem ersten Schema in der Objektebene 6 des Kollimators 1 sammelt und auf dessen Apertur leitet, wo sie weitgehend überlappen. Der Strahlquerschnitt entspricht Fig. 1b. Die Verwendung eines Umlenkelements erlaubt es, die Teillichtquellen 3a,b verhältnismässig weit entfernt voneinander anzuordnen, was die Kühlung der Laserdioden erleichtert.

Das vierte Schema (Fig. 4) entspricht weitgehend dem dritten. Der Unterschied liegt vor allem darin, dass die Sammeloptiken 4a,b, 9 anders eingestellt sind, derart, dass ähnlich wie bei der Lichtquelle gemäss dem zweiten Schema praktisch keine Ueberlappung der Teillichtstrahlen 5a,b auftritt, sondern die Apertur des Kollimators 1 durch die nebeneinander auf sie treffenden Teilstrahlen 5a,b gefüllt wird und sie sich anschliessend an denselben im wesentlichen parallel ausbreiten, derart, dass der Strahlquerschnitt Fig. 2b entspricht.

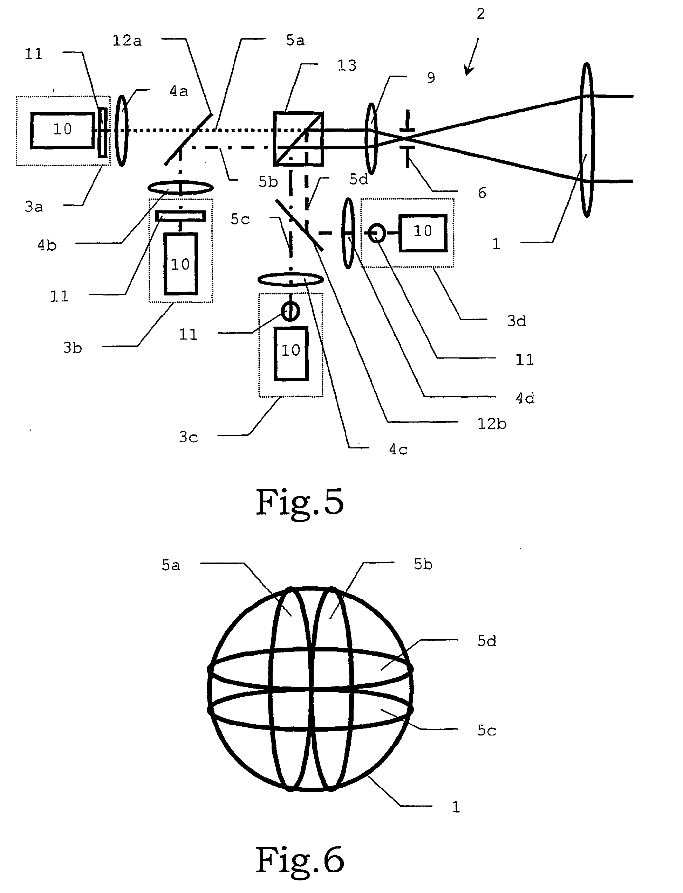

Fig. 5 zeigt, zwar ebenfalls schematisch, aber mehr ins Einzelne gehend, den Aufbau des Senders eines erfindungsgemässen Entfernungsmessers, der einem weiteren Schema entspricht. Er enthält ausser einem Kollimator 1 und einer Strahlsammeloptik 2 Teillichtquellen 3a,b, die senkrecht zueinander ausgerichtete Teilstrahlen 5a,b gleicher Polarisation aussenden und zwei weitere Teillichtquellen 3c,d, die ebenfalls senkrecht zueinander ausgerichtete Teilstrahlen 5c,d aussenden, deren Polarisation orthogonal zu der der Teilstrahlen 5a,b ist. Die Teillichtquellen 3a,b,c,d bestehen jeweils aus einer Laserdiode 10 und einer derselben in geringem Abstand nachgeordneten Zylinderlinse 11. Jeder der Teillichtquellen 3a,b,c,d ist eine Sammeloptik 4a;b;c;d nachgeordnet.

Den Sammeloptiken 4a,b ist als erstes Umlenkelement eine Platte 12a nachgeordnet, die zur Hälfte verspiegelt und zur Hälfte durchlässig ist, so dass sie den Teilstrahl 5a durchlässt, den Teilstrahl 5b jedoch in eine zum Teilstrahl 5a parallele Richtung ablenkt. Das den Sammeloptiken 4c,d nachgeordnete zweite Umlenkelement ist wie das erste als zur Hälfte verspiegelte und zur Hälfte durchlässige Platte 12b ausgebildet, die den Teilstrahl 5c durchlässt, während sie den Teilstrahl 5d in eine zu diesem parallele Richtung ablenkt. Die Teilstrahlen 5a,b einerseits und 5c,d andererseits erreichen jeweils unmittelbar nebeneinander einen Polarisationswürfel 13, wo die Teilstrahlenpaare rechtwinklig aufeinandertreffen. Dabei überlagern sich die Teilstrahlen 5a,b jeweils teilweise mit den orthogonal zu ihnen polarisierten Teilstrahlen 5c,d, die durch eine weitere Sammeloptik 9 in der Objektebene 6 des Kollimators 1 gesammelt und auf dessen Apertur gelenkt werden, die auf diese Weise weitgehend gefüllt wird (Fig. 6). In der Mitte des kreuzförmigen Lichtflecks liegt dabei ein ungefähr quadratischer Fleck doppelter Leuchtdichte, wo sich jeweils zwei Teilstrahlen orthogonaler Polarisation überlagern.

Es sind verschiedene Abwandlungen der beschriebenen Beispiele möglich. So können vor allem bei den Schemata 1 bis 4 mehr als die gezeigten zwei Teillichtquellen eingesetzt werden. Die Sammlung von Teilstrahlen durch Umlenkelemente kann zur Vergrösserung der Zahl der Teillichtquellen kaskadiert werden etc.. Schliesslich können auch Laserdioden mit Wellenlängen vor allem zwischen 600 nm und 1'000 nm und insbesondere zwischen 630 nm und 980 nm eingesetzt werden, die ausserhalb der oben angegebenen Bereiche liegen.

### Bezugszeichenliste

- 1: Kollimator
- 2: Strahlsammeloptik
- 3a,b,c,d: Teillichtquellen
- 4, 4a,b,c,d: Sammeloptiken
- 5a,b,c,d: Teilstrahlen
- 6: Objektebene von 1
- 7: Prisma
- 8a,b: Reflexionsflächen
- 9: Sammeloptik
- 10: Laserdiode
- 11: Zylinderlinse
- 12a,b: Platten
- 13: Polarisationswürfel

## Patentansprüche

1. Optischer Entfernungsmesser mit
• einem Sender mit einer Lichtquelle,
• einem Empfänger und
• einer Steuerungs- und Auswerteeinheit,
wobei die Lichtquelle mehrere Teillichtquellen (3a, 3b, 3c, 3d) mit jeweils einer Laserdiode umfasst und alle Laserdioden mit gleicher Wellenlänge senden,
**dadurch gekennzeichnet, dass**
• der Sender einen der Lichtquelle nachgeordneten Kollimator (1) aufweist und
• die Lichtquelle eine den Teillichtquellen nachgeordnete Strahlsammeloptik (2) aufweist, welche die von den Teillichtquellen (3a, 3b, 3c, 3d) ausgesandten Teilstrahlen (5a, 5b, 5c, 5d) sammelt und so in die Apertur des Kollimators (1) lenkt, dass sie dort
□ höchstens geringfügig überlappen und sich anschliessend an den Kollimator im Wesentlichen parallel ausbreiten oder
□ weitgehend überlappen und anschliessend an den Kollimator geringfügig auseinanderlaufen, sodass ihre Querschnitte in einer Zielentfernung nebeneinander liegen.

2. Optischer Entfernungsmesser nach Anspruch 1, **dadurch gekennzeichnet, dass** die Wellenlänge zwischen 630 nm und 980 nm, insbesondere zwischen 850 nm und 980 nm, liegt.

3. Optischer Entfernungsmesser nach Anspruch 1, **dadurch gekennzeichnet, dass** die Wellenlänge ca. 1'550 nm beträgt.

4. Optischer Entfernungsmesser nach einem der Ansprüche 1 bis 3, **dadurch gekennzeichnet, dass** die Strahlsammeloptik (2) mindestens eine im Strahlengang zwischen einer Teillichtquelle (3a, 3b, 3c, 3d) oder mehreren Teillichtquellen (3a, 3b, 3c, 3d) und dem Kollimator angeordnete Sammeloptik (4a, 4b, 4c, 4d, 9) aufweist.

5. Optischer Entfernungsmesser nach Anspruch 4, **dadurch gekennzeichnet, dass** jeweils mehreren Teillichtquellen (3a, 3b) eine Sammeloptik (4) unmittelbar nachgeordnet ist.

6. Optischer Entfernungsmesser nach Anspruch 4, **dadurch gekennzeichnet, dass** jeder Teillichtquelle (3a, 3b, 3c, 3d) eine eigene Sammeloptik (4a; 4b; 4c; 4d) unmittelbar nachgeordnet ist.

7. Optischer Entfernungsmesser nach einem der Ansprüche 1 bis 6, **dadurch gekennzeichnet, dass** die Strahlsammeloptik (2) mindestens ein Umlenkelement aufweist, welches jeweils mindestens einen von einer Teillichtquelle (3a, 3b, 3c, 3d) ausgehenden Teilstrahl (5a; 5b; 5c; 5d) ablenkt.

8. Optischer Entfernungsmesser nach Anspruch 7, **dadurch gekennzeichnet, dass** das mindestens ein Umlenkelement als Prisma (7) mit mehreren Reflexionsflächen (8a, 8b) ausgebildet ist.

9. Optischer Entfernungsmesser nach Anspruch 7 oder 8, **dadurch gekennzeichnet, dass** das mindestens ein Umlenkelement als mindestens teilweise verspiegelte Platte (12a, 12b) ausgebildet ist.

10. Optischer Entfernungsmesser nach einem der Ansprüche 1 bis 9, **dadurch gekennzeichnet, dass** die Strahlsammeloptik (2) mindestens ein Ueberlagerungselement aufweist zur Ueberlagerung von Teilstrahlen (5a, 5b, 5c, 5d) unterschiedlicher, vorzugsweiser orthogonaler Polarisation.

11. Optischer Entfernungsmesser nach Anspruch 10, **dadurch gekennzeichnet, dass** das mindestens ein Ueberlagerungselement als Polarisationswürfel (13) ausgebildet ist.

## Claims

1. Optical rangefinder comprising
• a transmitter having a light source,
• a receiver and
• a control and evaluation unit,
• the light source comprising a plurality of partial light sources (3a, 3b, 3c, 3d) having in each case a laser diode, and all laser diodes transmitting at the same wavelength,
**characterized in that**
• the transmitter has a collimator (1) downstream of the light source and
• the light source has a beam-collecting optical system (2) which is arranged downstream of the partial light sources and which collects the part-beams (5a, 5b, 5c, 5d) emitted by the partial light sources (3a, 3b, 3c, 3d) and guides said part-beams into the aperture of a collimator (1) so that there they
□ overlap at most slightly and, after the collimator, are propagated substantially in parallel or
□ substantially overlap and, after the collimator, diverge slightly so that their cross-sections are side by side at a target distance.

2. Optical rangefinder according to Claim 1, **characterized in that** the wavelength is between 630 nm and 980 nm, in particular between 850 nm and 980 nm.

3. Optical rangefinder according to Claim 1, **characterized in that** the wavelength is about 1550 nm.

4. Optical rangefinder according to any of Claims 1 to 3, **characterized in that** the beam-collecting optical system (2) has at least one collecting optical system (4a, 4b, 4c, 4d, 9) arranged in the beam path between a partial light source (3a, 3b, 3c, 3d) or a plurality of partial light sources (3a, 3b, 3c, 3d) and the collimator.

5. Optical rangefinder according to Claim 4, **characterized in that** a collecting optical system (4) is arranged in each case directly downstream of a plurality of partial light sources (3a, 3b).

6. Optical rangefinder according to Claim 4, **characterized in that** a separate collecting optical system (4a; 4b; 4c; 4d) is arranged directly downstream of each partial light source (3a, 3b, 3c, 3d).

7. Optical rangefinder according to any of Claims 1 to 6, **characterized in that** the beam-collecting optical system (2) has at least one deflecting element which in each case deflects at least one part-beam (5a; 5b; 5c; 5d) emanating from a partial light source (3a, 3b, 3c, 3d).

8. Optical rangefinder according to Claim 7, **characterized in that** the at least one deflecting element is in the form of a prism (7) having a plurality of reflective surfaces (8a, 8b).

9. Optical rangefinder according to Claim 7 or 8, **characterized in that** the at least one deflecting element is in the form of a plate (12a, 12b) provided at least partly with a reflective coating.

10. Optical rangefinder according to any of Claims 1 to 9, **characterized in that** the beam-collecting optical system (2) has at least one superposition element for superposing part-beams (5a, 5b, 5c, 5d) of different, preferably orthogonal polarization.

11. Optical rangefinder according to Claim 10, **characterized in that** the at least one superposition element is in the form of a polarization cube (13).

## Revendications

1. Télémètre optique, comprenant :
• un émetteur avec une source de lumière,
• un récepteur, et
• une unité de commande et d'évaluation,
la source de lumière comprenant une pluralité de sources de lumière partielles (3a, 3b, 3c, 3d) munies chacune d'une diode laser et toutes les diodes laser émettant à la même longueur d'onde,
**caractérisé en ce que**
• l'émetteur présente un collimateur (1) disposé en aval de la source de lumière, et
• la source de lumière présente une optique collectrice de rayons (2), disposée en aval des sources de lumière partielles, collectant les rayons partiels (5a, 5b, 5c, 5d) émis par les sources de lumière partielles (3a, 3b, 3c, 3d) et les déviant dans l'ouverture du collimateur (1), de manière que, à cet endroit,
■ ils se chevauchent au plus légèrement et se propagent ensuite sensiblement parallèlement au collimateur, ou
■ ils se chevauchent largement et s'écartent ensuite légèrement les uns des autres au collimateur, de manière que leurs sections transversales se situent les unes à côté des autres à une distance cible.

2. Télémètre optique selon la revendication 1, **caractérisé en ce que** la longueur d'onde est située dans la fourchette comprise entre 630 nm et 980 nm, en particulier comprise entre 850 nm et 980 nm.

3. Télémètre optique selon la revendication 1, **caractérisé en ce que** la longueur d'onde est d'environ 1.550 nm.

4. Télémètre optique selon l'une quelconque des revendications 1 à 3, **caractérisé en ce que** l'optique collectrice de rayons (2) présente au moins une optique collectrice (4a, 4b, 4c, 4d, 9) disposée dans le chemin des rayons, entre une source de lumière partielle (3a, 3b, 3c, 3d) ou plusieurs sources de lumière partielles (3a, 3b, 3c, 3d) et le collimateur.

5. Télémètre optique selon la revendication 4, **caractérisé en ce qu'**une optique collectrice (4) est disposée directement en aval de chaque fois plusieurs sources de lumière partielles (3a, 3b).

6. Télémètre optique selon la revendication 4, **caractérisé en ce que** qu'une optique collectrice (4a; 4b; 4c; 4d) est disposée directement en aval de chaque source de lumière partielle (3a, 3b, 3c, 3d).

7. Télémètre optique selon l'une quelconque des revendications 1 à 6, **caractérisé en ce que** l'optique collectrice de rayons (2) présente au moins un élément déviateur, déviant chaque fois au moins un rayon partiel (5a; 5b; 5c; 5d) partant d'une source de lumière partielle (3a, 3b, 3c, 3d).

8. Télémètre optique selon la revendication 7, **caractérisé en ce que** le au moins un élément déviateur est réalisé sous forme de prisme (7) comprenant plusieurs surfaces de réflexion (8a, 8b).

9. Télémètre optique selon la revendication 7 ou 8, **caractérisé en ce que** le au moins un élément déviateur est réalisé sous forme de plaque (12a, 12b) au moins partiellement argentée.

10. Télémètre optique selon l'une quelconque des revendications 1 à 9, **caractérisé en ce que** l'optique collectrice de rayons (2) présente au moins un élément à superposition, pour assurer une superposition de rayons partiels (5a, 5b, 5c, 5d) à polarisation différente, de préférence orthogonale.

11. Télémètre optique selon la revendication 01, **caractérisé en ce que** le au moins un élément à superposition est réalisé sous forme de cube de polarisation (13).
